# EUROPEAN PATENT SPECIFICATION

(11) **EP 2 157 502 B1**
(45) Date of publication and mention of the grant of the patent: **15.07.2015**
(21) Application number: 09000719.6
(22) Date of filing: 20.01.2009
(51) Int. Cl.: G06F 3/0482, G06F 3/0485, G06F 3/0488

(54) **Mobile terminal and method of controlling operation of the mobile terminal**
Mobilendgerät und Betriebssteuerungsverfahren dafür
Terminal mobile et procédé de commande du fonctionnement du terminal mobile

(30) Priority: 13.08.2008 KR 20080079589
(43) Date of publication of application: 24.02.2010
(73) Proprietor: LG Electronics Inc., Seoul 150-721 (KR)
(72) Inventor: Tae Yong, Kim, Seoul 153-023 (KR)
(74) Representative: Katérle, Axel

(56) References cited:
- JP-A- 2008 009 781
- US-A- 5 745 096
- US-A1- 2001 009 420
- US-A1- 2007 176 922

## Description

### BACKGROUND OF THE INVENTION

### 1. Field of the Invention

The present invention relates to a mobile terminal and corresponding method for fixing a selected item in a list of displayed items while the list of displayed items are scrolled.

### 2. Description of the Related Art

Mobile terminals now provide many additional services beside the basic call service. For example, user's can now access the Internet, play games, watch videos, listen to music, capture images and videos, record audio files, etc. Mobile terminals also now provide broadcasting programs such that user can watch television shows, sporting programs, videos etc.

Because of the large diversity of applications and functions available with a mobile terminal, the mobile terminal includes various user interfaces (UI) allowing a user to easily search for and choose desired functions. However, because the mobile terminal is small in size, the user interfaces are also small in size and thus somewhat difficult to use. US 2007/0176922 A1 relates to an information display apparatus suitable for application where a plurality of objects are presented for user's selection.

### SUMMARY OF THE INVENTION

Accordingly, one object of the present invention is to address the above-noted and other drawbacks.

Another object of the present invention is to provide a mobile terminal and corresponding method for selectively scrolling a list of items except for one or more items selected by a user.

To achieve these and other advantages and in accordance with the purpose of the present invention, as embodied and broadly described herein, the present invention provides in one aspect a method of controlling a mobile terminal according to independent claim 1.

In another aspect, the present invention provides a mobile terminal according to independent claim 9.

Further scope of applicability of the present invention will become apparent from the detailed description given hereinafter. However, it should be understood that the detailed description and specific examples, while indicating preferred embodiments of the invention, are given by illustration only, since various changes and modifications within the scope of the invention will become apparent to those skilled in the art from this detailed description.

### BRIEF DESCRIPTION OF THE DRAWINGS

The above and other features and advantages of the present invention will become more apparent by describing in detail embodiments thereof with reference to the attached drawings in which:
FIG. 1 illustrates a block diagram of a mobile terminal according to an embodiment of the present invention;
FIG. 2 illustrates a front perspective view of the mobile terminal shown in FIG. 1;
FIG. 3 illustrates a rear perspective view of the mobile terminal shown in FIG. 1;
FIGS. 4A and 4B illustrate flowcharts of a method of controlling an operation of a mobile terminal according to an embodiment of the present invention;
FIGS. 5A-5C are overviews of display screens illustrating an item selection operation according to an embodiment of the present invention;
FIGS. 6A and 6B are overviews of display screens illustrating a scrolling operation according to an embodiment of the present invention;
FIGS. 7A and 7B are overviews of display screens illustrating a scrolling operation according to another embodiment of the present invention;
FIG. 8 is an overview of a display screen illustrating a item selection method according to another embodiment of the present invention; and
FIGS. 9A-9C are overviews of display screens illustrating a scrolling operation according to yet another embodiment of the present invention.

### DETAILED DESCRIPTION OF THE INVENTION

The present invention will hereinafter be described in detail with reference to the accompanying drawings in which embodiments of the invention are shown.

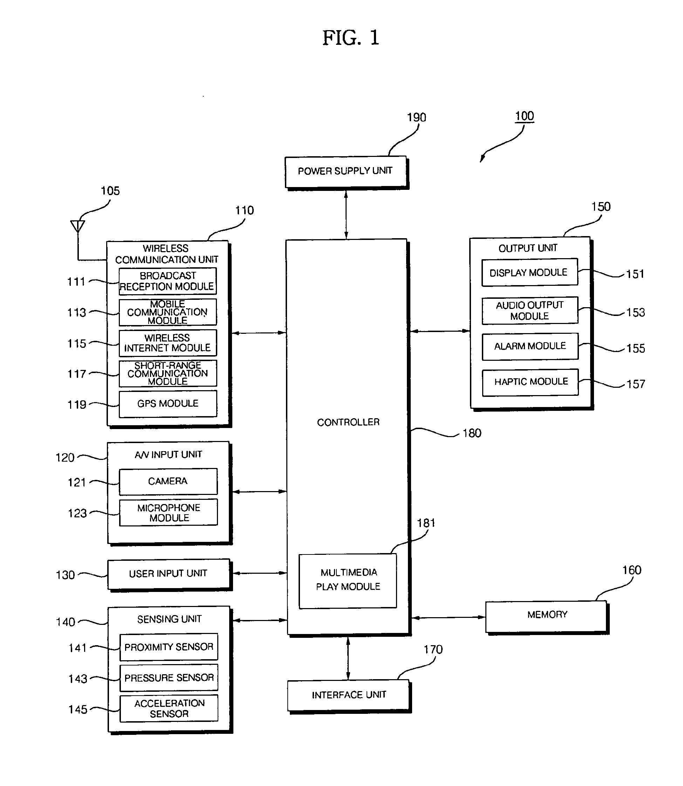

FIG. 1 illustrates a block diagram of a mobile terminal 100 according to an embodiment of the present invention. As shown in FIG. 1, the mobile terminal 100 includes a wireless communication unit 110, an audio/video (A/V) input unit 120, a user input unit 130, a sensing unit 140, an output unit 150, a memory 160, an interface unit 170, a controller 180, and a power supply unit 190. Two or more of these components can be incorporated into a single unit, or a component can be divided into two or more smaller units.

Further, the wireless communication unit 110 includes a broadcast reception module 111, a mobile communication module 113, a wireless Internet module 115, a short-range communication module 117, and a global positioning system (GPS) module 119. The broadcast reception module 111 receives a broadcast signal and/or broadcast-related information from an external broadcast management server through a broadcast channel. Examples of the broadcast channel include a satellite channel and a terrestrial channel.

In addition, the broadcast management server can be a server which generates broadcast signals and/or broadcast-related information and transmits the generated broadcast signals and/or the generated broadcast-related information, or a server which receives and then transmits previously-generated broadcast signals and/or previously-generated broadcast-related information.

Examples of the broadcast-related information include broadcast channel information, broadcast program information and broadcast service provider information. Examples of the broadcast signals include a TV broadcast signal, a radio broadcast signal, a data broadcast signal, or the combination of a data broadcast signal and either a TV broadcast signal or a radio broadcast signal. The broadcast-related information can be provided to the mobile terminal 100 through a mobile communication network, and can also be received by the mobile communication module 113, rather than by the broadcast reception module 111. Further, the broadcast-related information may come in various forms, for example, an electronic program guide (EPG) of the digital multimedia broadcasting (DMB) system or an electronic service guide (ESG) of the digital video broadcast-handheld (DVB-H) system.

In addition, the broadcast reception module 111 can receive the broadcast signal using various broadcasting systems such as the digital multimedia broadcasting-terrestrial (DMB-T) system, the digital multimedia broadcasting-satellite (DMB-S) system, the media forward link only (MediaFLO) system, the DVB-H, and integrated services digital broadcast-terrestrial (ISDB-T) system, etc. Further, the broadcast reception module 111 can be configured to be suitable for nearly all types of broadcasting systems other than those set forth herein.

Also, the broadcast signal and/or the broadcast-related information received by the broadcast reception module 111 can be stored in the memory 160. Further, the mobile communication module 113 transmits wireless signals to or receives wireless signals from at least one of a base station, an external terminal, and a server through a mobile communication network. The wireless signals may include various types of data according to whether the mobile terminal 100 transmits/receives voice call signals, video call signals, or text/multimedia messages.

Further, the wireless Internet module 115 wirelessly accesses the Internet, and can be embedded in the mobile terminal 100 or be installed in an external device. The wireless Internet module 115 can use various wireless Internet techniques such as wireless fidelity (WiFi), wireless broadband (Wibro), world interoperability for microwave access (Wimax) or high-speed downlink Packet Access (HSDPA).

Further, the short-range communication module 117 is a module for short-range communication, and can use various short-range communication techniques such as Bluetooth, radio frequency identification (RFID), infrared data association (IrDA), ultra wideband (UWB), and ZigBee, for example.

In addition, the GPS module 119 receives position information from a plurality of GPS satellites. Further, the A/V input unit 120 is used to receive audio signals or video signals. In FIG. 1, the A/V input unit 120 includes a camera 121 and a microphone module 123. The camera 121 processes various image frames such as still images or moving images captured by an image sensor during a video call mode or an image capturing mode. The image frames processed by the camera 121 can then be displayed by a display module 151.

Further, the image frames processed by the camera 121 can be stored in the memory 160 or be transmitted outside the mobile terminal 100 through the wireless communication unit 110. The mobile terminal 100 can also include two or more cameras 121. In addition, the microphone module 123 receives external sound signals during a call mode, a recording mode, or a voice recognition mode with the use of a microphone and converts the sound signals into electrical sound data. In the call mode, the mobile communication module 113 converts the electrical sound data into data that can be readily transmitted to a mobile communication base station and then outputs the data obtained by the conversion. The microphone module 123 can also include or use various noise removal algorithms to remove noise that may be generated during the reception of external sound signals.

In addition, the user input unit 130 generates key input data based on user input for controlling the operation of the mobile terminal 100. For example, the user input unit 130 can be implemented as a keypad, a dome switch, a touch pad (either static pressure or constant electricity), a jog wheel, or a jog switch. In particular, if the user input unit 130 is implemented as a touch pad and forms a mutual layer structure along with the display module 151, the user input unit 130 and the display module 151 may be collectively referred to as a touch screen.

In addition, the sensing unit 140 determines a current state of the mobile terminal 100 such as whether the mobile terminal 100 is opened up or closed, the position of the mobile terminal 100 and whether the mobile terminal 100 is placed in contact with a user, and generates a sensing signal for controlling the operation of the mobile terminal 100. For example, when the mobile terminal 100 is a slider-type mobile phone, the sensing unit 140 can determine whether the mobile terminal 100 is opened up or closed. In addition, the sensing unit 140 can determine whether the mobile terminal 100 is powered by the power supply unit 190 and whether the interface unit 170 is connected to an external device.

Further, the sensing unit 140 includes a proximity sensor 141, a pressure sensor 143, and an acceleration sensor 145. The proximity sensor 141 can determine whether there is an entity nearby and approaching the mobile terminal 100 without any mechanical contact with the entity. More specifically, the proximity sensor 141 can detect an entity that is nearby and approaching by detecting a change in an alternating magnetic field or the rate of change of static capacitance. The sensing unit 140 can also include two or more proximity sensors 141.

In addition, the pressure sensor 143 can determine whether pressure is being applied to the mobile terminal 100 and detect the magnitude of pressure applied to the mobile terminal 100. The pressure sensor 143 can be installed in a portion of the mobile terminal 100 in which the detection of pressure is used. For example, the pressure sensor 143 can be installed in the display module 151. In this instance, the display module 151 can differentiate a typical touch input from pressure touch input, which is generated by applying greater pressure than that used to generate the typical touch input, based on a signal output by the pressure sensor 143. In addition, it is possible to determine the magnitude of pressure applied to the display module 151 upon receiving a pressure touch input based on the signal output by the pressure sensor 143.

Further, acceleration sensors are a type of device for converting an acceleration variation into an electric signal. For example, the micro-electromechanical system (MEMS) technology includes acceleration sensors. Acceleration sensors are also installed in an airbag system for an automobile and used to detect collisions. Alternatively, an acceleration sensor can be used as an input device for a computer game and sense the motion of the human hand during a computer game. Two or three acceleration sensors 145 representing different axial directions can also be installed in the mobile terminal 100. Alternatively, only one acceleration sensor 145 representing a Z axis can be installed in the mobile terminal 100.

In addition, the output unit 150 outputs audio signals, video signals and alarm signals. The output unit 150 in FIG. 1 includes the display module 151, an audio output module 153, an alarm module 153, and a haptic module 157. The display module 151 displays various information processed by the mobile terminal 100. For example, if the mobile terminal 100 is in a call mode, the display module 151 displays a user interface (UI) or a graphic user interface (GUI) for making or receiving a call. If the mobile terminal 100 is in a video call mode or an image capturing mode, the display module 151 displays a UI or a GUI for capturing or receiving images.

Also, as described above, if the display module 151 and the user input unit 130 form a mutual layer structure and are thus implemented as a touch screen, the display module 151 can be used not only as an output device but also as an input device. The display module 151 may also include at least one of a liquid crystal display (LCD), a thin film transistor (TFT)-LCD, an organic light-emitting diode (OLED), a flexible display, and a three-dimensional (3D) display. Further, the mobile terminal 100 can include two or more display modules 151. For example, the mobile terminal 100 can include an external display module and an internal display module.

In addition, the audio output module 153 can output audio data received by the wireless communication unit 110 during a call reception mode, a call mode, a recording mode, a voice recognition mode, or a broadcast reception mode or output audio data present in the memory 160. Further, the audio output module 153 can output various sound signals associated with the functions of the mobile terminal 100 such as receiving a call or a message. The audio output module 153 may also include a speaker and a buzzer.

Also, the alarm module 155 can output an alarm signal indicating the occurrence of an event in the mobile terminal 100. Examples of the event include receiving a call signal, receiving a message, and receiving a key signal, and examples of the alarm signal output by the alarm module 155 include an audio signal, a video signal and a vibration signal. Further, the alarm module 155 can output a signal upon receiving a call signal or a message, and can receive a key signal and output a signal as feedback to the key signal. Thus, once a signal is output by the alarm module 155, the user can recognize that an event has occurred. Further, a signal for notifying the user of the occurrence of an event can be output by the display module 151 or the audio output module 153.

In addition, the haptic module 157 can provide various haptic effects (such as vibrations) that can be perceived by the user. The intensity and the pattern of vibration generated by the haptic module 157 can also be altered in various manners. The haptic module 157 can also synthesize different vibration effects and output the result of the synthesization. Alternatively, the haptic module 157 can sequentially output different vibration effects.

Further, the haptic module 157 can provide various haptic effects, other than vibration, such as a haptic effect obtained using a pin array that moves perpendicularly to a contact skin surface, a haptic effect obtained by injecting or sucking in air through an injection hole or a suction hole, a haptic effect obtained by giving a stimulus to the surface of the skin, a haptic effect obtained through contact with an electrode, a haptic effect obtained using an electrostatic force, and a haptic effect obtained by realizing the sense of heat or cold using a device capable of absorbing heat or generating heat. The haptic module 157 can also be configured to enable the user to recognize a haptic effect using the kinesthetic sense of the fingers or the arms. The mobile terminal 100 can also include two or more haptic modules 157.

Further, the memory 160 stores various programs used for the operation of the controller 180. In addition, the memory 160 can temporarily store various data such as a phonebook, messages, still images, or moving images. The memory 160 may include at least one of a flash memory type storage medium, a hard disk type storage medium, a multimedia card micro type storage medium, a card type memory (e.g., a secure digital (SD) or extreme digital (XD) memory), a random access memory (RAM), and a read-only memory (ROM). The mobile terminal 100 can also operate a web storage, which performs the functions of the memory 160 on the Internet.

In addition, the interface unit 170 interfaces with an external device connected to the mobile terminal 100. The interface unit 170 may be a wired/wireless headset, an external battery charger, a wired/wireless data port, a card socket for, for example, a memory card) or a subscriber identification module (SIM)/user identity module (UIM) card, an audio input/output (I/O) terminal, a video I/O terminal, or an earphone. Further, the interface unit 170 can receive data from an external device or be powered by an external device. The interface unit 170 can also transmit data provided by an external device to other components in the mobile terminal 100 or transmit data provided by other components in the mobile terminal 100 to an external device.

Also, if the mobile terminal 100 is connected to an external cradle, power can be supplied from the external cradle to the mobile terminal through the interface unit 170, and various command signals can be transmitted from the external cradle to the mobile terminal through the interface unit 170. Further, the controller 180 controls the overall operations of the mobile terminal 100. For example, the controller 180 can perform various control operations regarding making/receiving a voice call, transmitting/receiving data, or making/receiving a video call.

In addition, the controller 180 includes a multimedia play module 181, which plays multimedia data. The multimedia play module 181 may be implemented as a hardware device and be installed in the controller 180. Alternatively, the multimedia play module 181 may be implemented as a software program. In addition, the power supply unit 190 is supplied with power by an external power source or an internal power source and supplies power to other components in the mobile terminal 100.

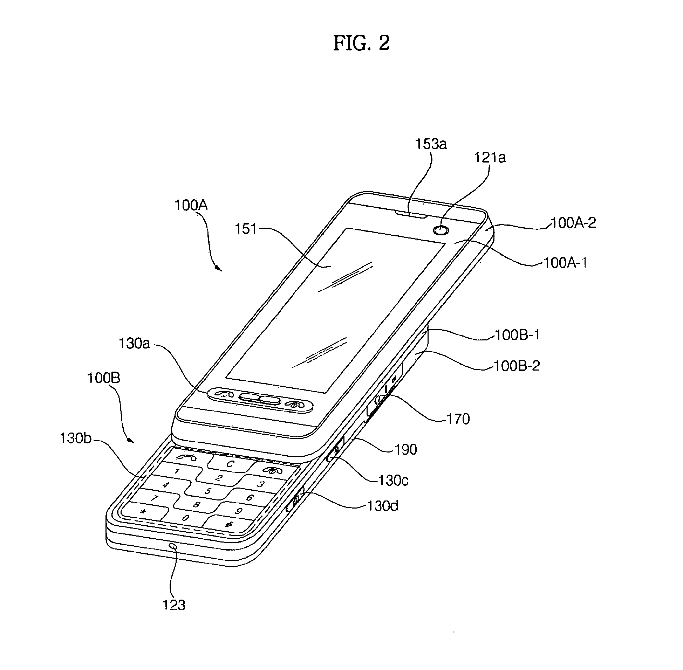

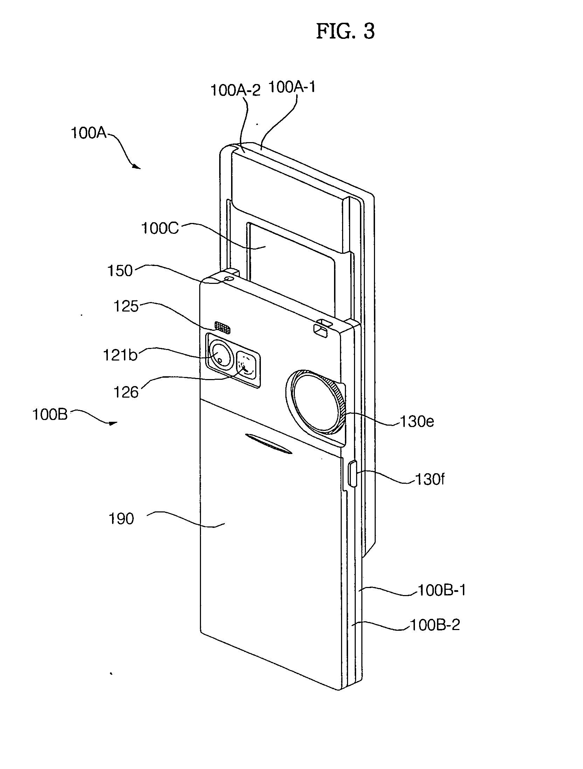

The mobile terminal 100 can also be configured to operate in a wired/wireless communication system and a satellite-based communication system, and to operate in a communication system transmitting data as frames or packets. An exterior of the mobile terminal 100 will now be described in detail with reference to FIGS. 2 and 3. In this description, the mobile terminal 100 is a slider-type mobile phone. However, the present invention can be applied to various mobile phones, other than a slider-type mobile phone.

In more detail, FIG. 2 illustrates a front perspective view of the mobile terminal 100 shown in FIG. 1. As shown in FIG. 2, the mobile terminal 100 includes a first body 100A and a second body 100B configured to slide in at least one direction along the first body 100A. When the first body 100A overlaps the second body 100B, the mobile terminal 100 is closed. Also, when the first body 100A exposes at least part of the second body 100B, the mobile terminal 100 is opened.

In addition, when the mobile terminal 100 is closed, the mobile terminal 100 generally operates in a standby mode, and can be manually released from the standby mode by a user. When the mobile terminal 100 is opened, the mobile terminal 100 generally operates in a call mode, and can be placed in a standby mode either manually by a user or automatically after the lapse of a predetermined amount of time.

Further, the first body 100A includes a first front case 100A-1 and a first rear case 100A-2, which form the exterior of the first body 100A. Various electronic products may be installed in the empty space between the first front case 100A-1 and the first rear case 100A-2. In addition, at least one intermediate case may be additionally disposed between the first front case 100A-1 and the first rear case 100A-2. The first front case 100A-1 and the first rear case 100A-2 may be formed of a synthetic resin through injection molding or may be formed of a metal such as stainless steel (STS) or titanium (Ti).

In addition, the display module 151, a first sound module 153a, a first camera 121a and a first user input module 130a are disposed in the first body 100A, and particularly, in the first front case 100A-1. The display module 151 may include an LCD or an OLED, which visually represents information. Further, because a touch pad is configured to overlap the display module 151 and thus to realize a layer structure, the display module 151 can serve as a touch screen. Thus, it is possible for a user to input information to the display module 151 simply by touching the display module 151.

Also, the first sound module 153a may be implemented as a receiver or a speaker, and the first camera 121a can capture a still image or a moving image of a user. The second body 100B includes a second front case 100B-1 and a second rear case 100B-2, which form the exterior of the second body 100B. Further, a second user input module 130b is disposed at the front of the second body 100B, and particularly, at the front of the second front case 100B-1. Third and fourth user input modules 130c and 130d, the microphone 123 and the interface unit 170 are disposed in the second front case 100B-1 or the second rear case 100B-2.

In addition, the first through fourth user input modules 130a through 130d and fifth and sixth user input modules 130e and 130f may be collectively referred to as the user input unit 130. Also, the user input unit 130 may adopt various manipulation methods and offer tactile feedback to a user. For example, the user input unit 130 can be implemented as a dome switch or a touch pad, which receives a command or information upon being pushed or touched by a user. Alternatively, the user input unit 130 can be implemented as a wheel, a jog dial, or a joystick.

Further, the first user input module 130a allows a user to input such commands as 'start', 'end', and 'scroll', and the second user input module 130b allows a user to input numbers, characters or symbols. The third through sixth user input modules 130c and 130f can serve as hot keys for activating certain functions of the mobile terminal 100.

In addition, the microphone 123 can receive the voice of a user or other sounds, and the interface unit 170 can serve as a path for allowing the mobile terminal 100 to exchange data with an external device. For example, the interface unit 170 may be a connection terminal for connecting an earphone to the mobile terminal 100 in a wired or wireless manner, a port for short-range communication or a power supply terminal for supplying power to the mobile terminal 100. The interface unit 170 may also be a SIM or a UIM or be a card socket for an exterior-type card such as a memory card for storing data.

Next, FIG. 3 illustrates a rear perspective view of the mobile terminal 100 shown in FIG. 2. Referring to FIG. 3, a fifth user input module 130e and a second camera 121b are disposed at the rear of the second rear case 100B-2 of the second body 100B. The fifth user input module 130e can be a wheel type. In addition, a sixth user input module 130f is disposed on a lateral side of the second body 100B.

Further, the second camera 121b can have a different photographing direction from that of the first camera 121a shown in FIG. 2. In addition, the number of pixels of the second camera 121 b can be different from the number of pixels of the first camera 121 a. For example, the first camera 121 a can be used to capture an image of the face of a user and then readily transmit the captured image during a video call. Thus, a low-pixel camera can be used as the first camera 121a. The second camera 121 b can be used to capture an image of an ordinary subject. Given that images captured by the second camera 121b generally do not need to be transmitted, a high-pixel camera can be used as the second camera 121 b.

Further, a camera flash 125 and a mirror 126 are disposed near the second camera 121b. The camera flash 125 illuminates a subject when the second camera 121b captures an image of the subject, and the user can look in the mirror 126 for taking a self shot. Also, a second audio output module may be additionally provided in the second rear case 100B-2, and be used to realize a stereo function along with the first audio output module 153a. The second audio output module can also be used during a speaker-phone mode.

In addition, an antenna for receiving a broadcast signal can be disposed on one side of the second rear case 100B-2, and be installed so as to be able to be pulled out from the second body 100B-2. Further, a slider module 100C is disposed on the first rear case 100A-2 of the first body 100A, and couples the first body 100A and the second body 100B so that the first body 100A can slide along the second body 100B. The slider module 100C can also be partially exposed by the second front case 100B-1.

Further, the second camera 121b is illustrated in FIG. 3 as being disposed on the second body 100B, but the present invention is not restricted to this embodiment. For example, at least one of the antenna, the second camera 121b and the camera flash 125 can be mounted on the first body 100A, and particularly, the first rear case 100A-2 of the first body 100A. In this instance, whichever of the antenna, the second camera 121 b and the camera flash 125 is mounted on the first rear case 100A-2 can be protected by the second body 100B when the mobile terminal 100 is closed. Also, the first camera 121a can rotate and thus cover the photographing direction of the second camera 121 a. In this instance, the second camera 121 b can be optional.

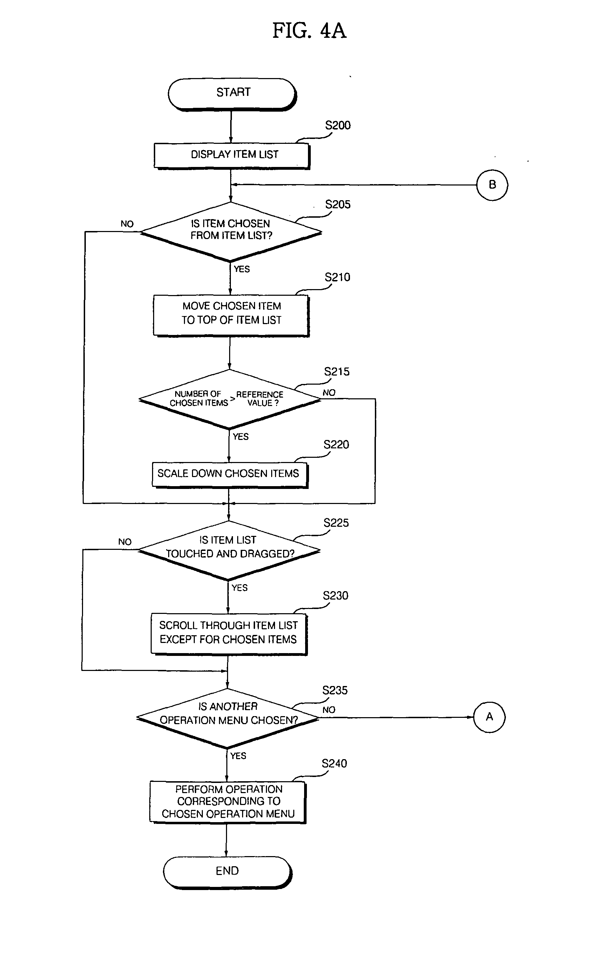

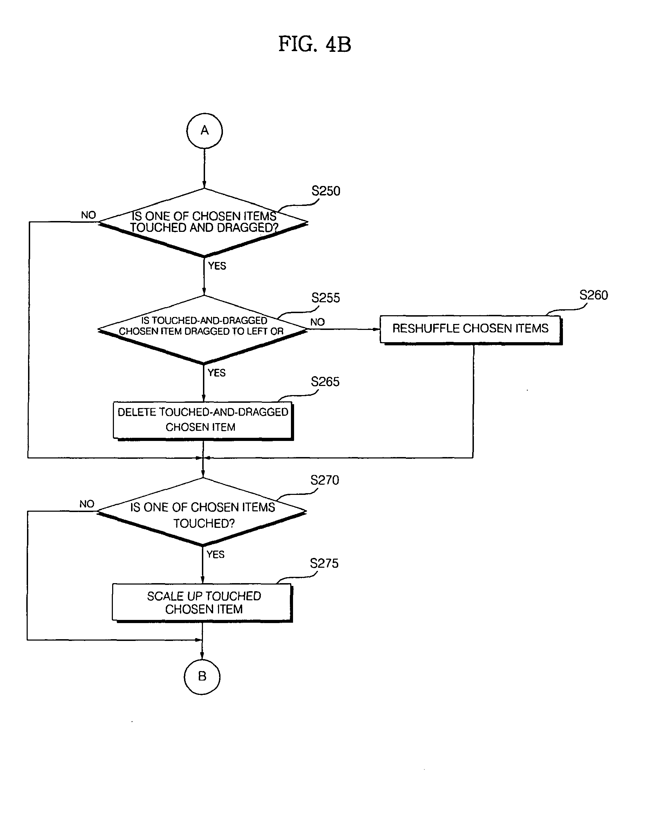

Next, FIGS. 4A and 4B are flowcharts illustrating a method of controlling an operation of a mobile terminal according to an embodiment of the present invention. Referring to FIG. 4A, when the user selects a menu involving displaying a list of files such as a phonebook menu, a mail inbox/outbox menu, an MP3 player menu, a moving image player menu, an image view menu, etc., the controller 180 displays an item list corresponding to the selected menu on the screen of the display module 151, e.g., on a touch screen (S200).

Then, if the user selects or touches one or more of a plurality of items included in the item list (Yes in S205), the controller 180 moves the selected items to the top of the item list (S210). Further, the controller 180 can also emphatically display the selected items to be displayed differently from other non-selected items in terms of size, color and shape, for example. The controller 180 can also move the selected items to the bottom of the item list or next to the item list, instead of the top of the item list, or display the selected items in a certain predetermined region on the screen of the display module 151.

The controller 180 also determines whether the number of items selected in step S205 exceeds a predetermined reference value (S215). If the controller 180 determines the number of selected items exceeds the reference value (Yes in S215), the controller 180 can scale down (e.g., decrease in size) and display the selected items (S220). Alternatively, the controller 180 can display the chosen items as thumbnail images.

Then, if the user touches and drags the item list (Yes in S225), the controller 180 selectively scrolls the non-selected items in the item list (S230). That is, a number of items selected from the item list in response to the touch input stay where they are at the top of the item list, and the other non-selected items are scrolled through in a direction corresponding to the drag input.

Also, if the user selects an operation menu (Yes in S235), the controller 180 executes an operation corresponding to the selected operation menu (S240). On the other hand, if the user does not select an operation menu (No in S235), the method proceeds to step S250 in FIG. 4B. Referring to FIG. 4B, if the user touches and drags one of the selected items displayed at the top of the item list (Yes in S250), the controller 180 determines whether the touched-and-dragged chosen item has been dragged to the left or right edge of the display module 151 (S255).

If the controller 180 determines the user has touched-and-dragged the selected item to the left or right edge of the display module 151 (Yes in S255), the controller 180 deletes the touched-and-dragged selected item from the item list (S265). On the other hand, if the controller 180 determines the user has not touched-and-dragged the selected item to the left or right edge of the display module 151 (No in S255), the controller 180 displays the touched-and-dragged selected item at a position to which the touched-and-dragged selected item has been dragged (S260).

Then, if the user touches one of the selected items displayed at the top of the item list (Yes in S270), the controller 180 scales up (e.g., increases in size) the touched item, and displays the scaled-up item on the screen of the display module 151 (S275). Thereafter, the method returns to step S205 in FIG. 4A.

More specifically, if the item list includes a plurality of phone numbers or music files and the user touches one of the phone numbers or the music files in step S270, the controller 180 displays a detailed description of the phone number or the music file corresponding to the touch input detected in operation S270. Also, if the item list includes a plurality of still images or moving images and the user touches one of the still images or the moving images in operation S270, the controller 180 scales up the still image or the moving image corresponding to the touch input detected in operation S270.

Further, if the item list includes a plurality of messages and the user touches one of the messages in step S270, the controller 180 can display the contents of the message corresponding to the touch input detected in step S270. In addition, if the user touches one of the selected items displayed at the top of the item list twice in a row, the controller 180 can execute the corresponding item.

In this manner, the user can easily choose or select one or more items from an item list displayed on the screen of the display module 151 and effectively scroll through a number of items except for the selected items in response to a touch-and-drag input. Further, the embodiment of FIGS. 4A and 4B has been described in regards to an item list as an example. However, the present invention can be applied to various lists, other than an item list, and to various situations that require a screen scrolling operation.

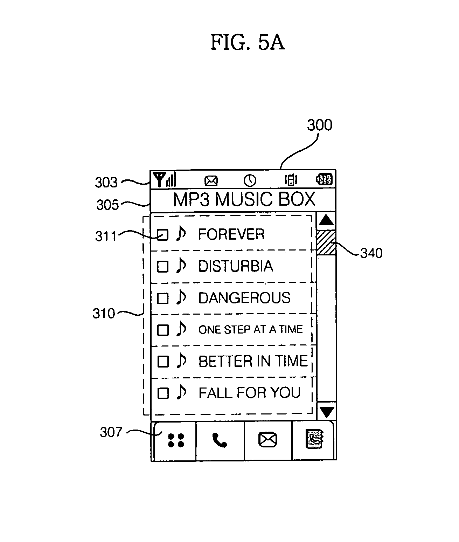

Next, FIGS. 5A-5C are overviews of display screens illustrating an item selection operation illustrated in FIGS. 4A and 4B. More specifically, FIG. 5A is an overview of an MP3 player display screen 300. Referring to FIG. 5A, various indicator icons 303 indicating a received signal strength, the setting of an alarm function, the setting of a vibration function, current time information, and remaining battery power information are displayed at the top of the MP3 player screen 300. A name of the menu currently being executed "MP3 MUSIC BOX" is displayed below the indicator icons 303, as indicated by reference numeral 305.

Further, the MP3 player screen 300 also includes an item list 310 including a plurality of items that can be selected and played. Also, in this example, because the number of items included in the item list 310 exceeds a predetermined reference value, the controller 180 displays a scroll bar 340 on one side (or both sides) of the MP3 player screen 300. In addition, a plurality of icons 307 for selecting a menu, other than the current menu and confirming or cancelling a choice made by a user are displayed at the bottom of the MP3 player screen 300. The plurality of items in the item list 310 also include corresponding checkboxes 311 to indicate whether each of the items included in the item list 310 is selected (e.g., via a touch input method).

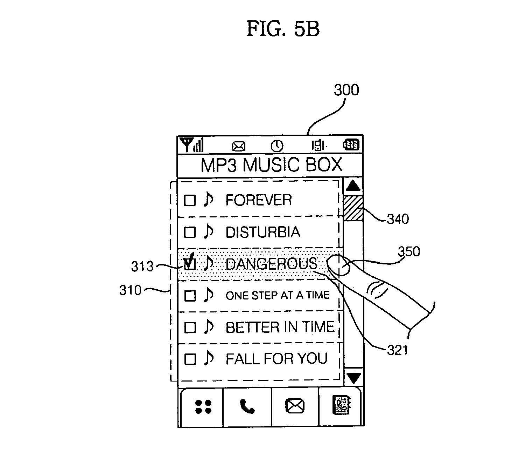

Next, FIG. 5B illustrates the situation when one of the items included in the item list 310 of FIG. 5A is selected. Referring to FIG. 5B, when the user performs a touch input 350 for one of the items included in the item list 310 (e.g., an item 321), the controller 180 indicates the item 321 is selected by marking the corresponding checkbox 313. Further, the controller 180 can also discriminately display the item 321 differently from other non-selected items so as identify the item as being selected.

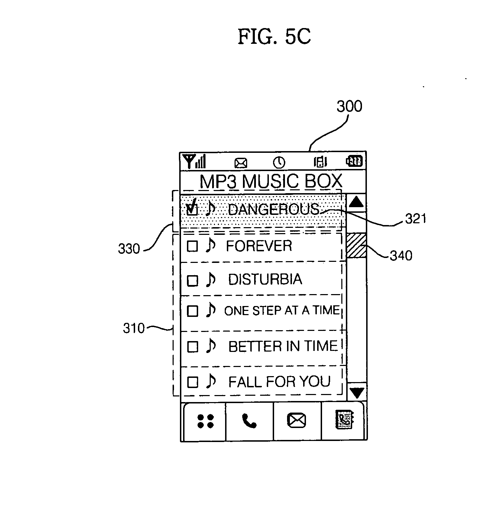

Then, as shown in FIG. 5C, the controller 180 displays a selected item list 330 including the selected item 321 above the item list 310. Thus, the selected item 321 is displayed at the top of the item list 310. Further, the controller 180 can discriminately display the selected item list 330 and the selected item 321 from the other items using, for example, a different font color, font type, and background color.

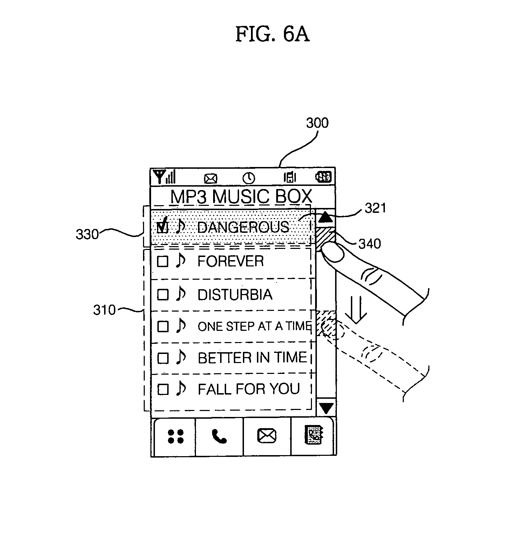

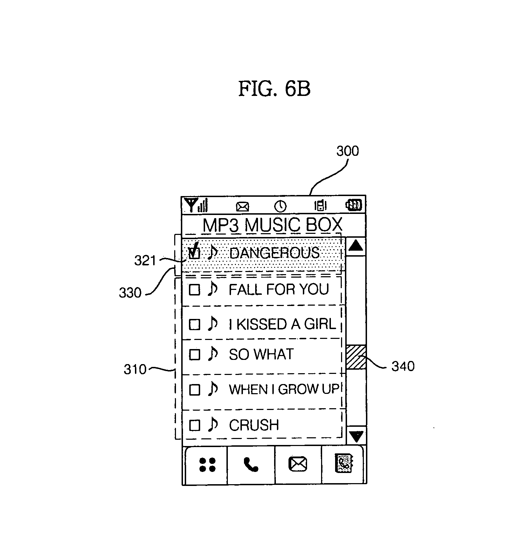

Next, FIGS. 6A and 6B are overviews of display screens illustrating a scrolling operation according to an embodiment of the present invention. Referring to FIG. 6A, when the user touches and drags the scroll bar 340 up or down, the controller 180 only scrolls the items included in the item list 310 along the direction in which the scroll bar 340 is dragged, while fixing the item 321 included in the selected item list 330. Alternatively, the user can also scroll through the items in the item list 310 by touching and dragging the item list 310 instead of touching and dragging the scroll bar 340. Still alternatively, the user can scroll through the items in the items list 310 by manipulating a key on the user input unit 130, for example.

As shown in FIG. 6B, the controller 180 scrolls the items in the items list 310 in response to the user's scrolling operation in FIG. 6A, while maintaining the item list 330 including the selected item 321 at the top of the display screen 300. That is, the item list 310 is maintained in the same position.

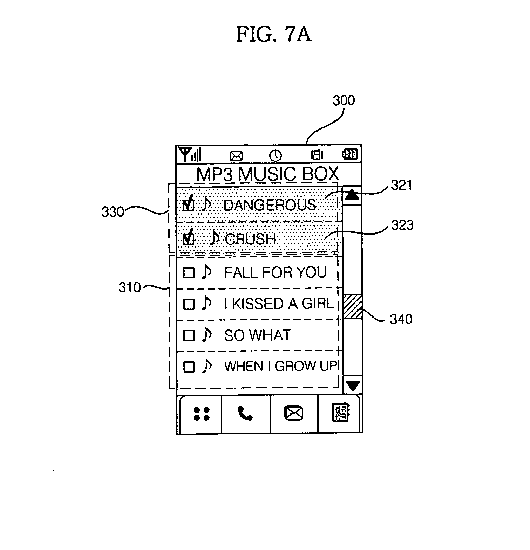

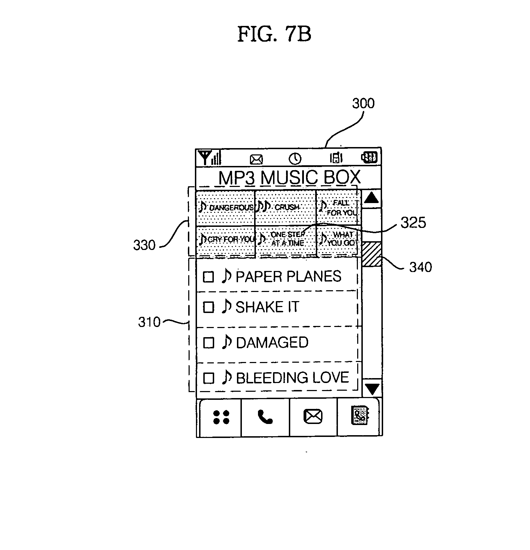

Next, FIGS. 7A and 7B illustrate the situation when more than one item is selected from the item list 310. Referring to FIG. 7A, the user has also selected an item 323 from the item list 310 when the selected item list 330 including the item 321 is displayed above the item list 310. Thus, as shown in FIG. 7A, the controller 180 adds the item 323 to the selected item list 330 displayed at the top of the display screen 300. Further, the controller 180 can also discriminately display the item 323 differently from other non-selected items included in the item list 310. The controller 180 also keeps the newly selected item 323 in the item list 330 when the user scrolls the items using the scroll bar 340.

Further, FIG. 7B illustrates the situation in which the number of items included in the selected item list 330 exceeds a predetermined reference value. That is, the controller 180 scales down or reduces the size of the items included in the item list 330 such that all of the items in the items list 330 can be displayed together. Further, the controller 180 can scale down or reduce the items in the items list 330 by reducing the font size or partially displaying the items. The controller 180 can also display the items in the items list 330 as thumbnail images. Further, when the user uses the scroll bar 340, the controller 180 maintains the items in the items list 330 at the top of the display screen 300 and only scrolls through the items in the items list 310.

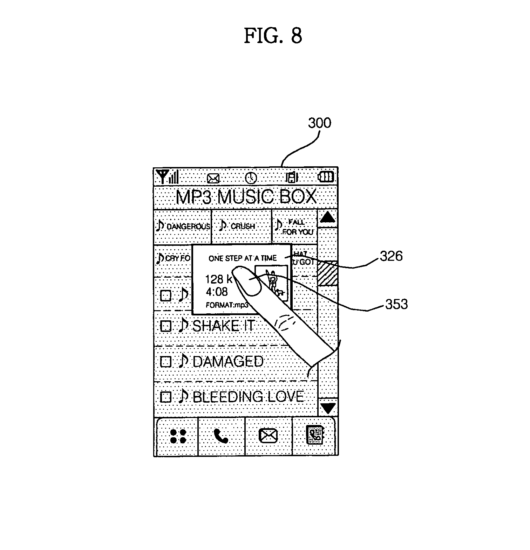

Next, FIG. 8 illustrates the situation in which the user selects one of the items included in the item list 330. Referring to FIG. 8, when the user selects one of the items included in the item list 330 via a touch input 353 (and when the items included in the item list 330 are displayed at a reduced scale), the controller 180 scales up or enlarges the selected item, as indicated by reference numeral 326. Further, the scaled-up item 326 may include detailed information such as the name of a music file corresponding to the selected item, sound source information, running time information, an album jacket image, singer information, etc.

The controller 180 can also display the scaled-up item 326 to be brighter than other items. Alternatively, the controller 180 can display the scaled-up item 326 to be semi-transparent. The controller 180 can also return the scaled-up item 326 to its original size a predetermined amount of time after being scaled up, when the user releases the touch 353, when a cancel or escape key input is received, etc.

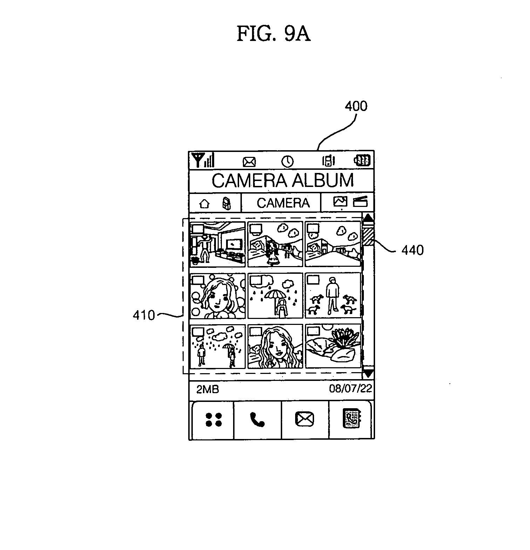

FIGS. 9A-9C are overviews of display screens illustrating a selection of an item from an image list and how to effectively scroll through the image list according to an embodiment of the present invention. Referring to FIG. 9A, when the user selects an image view menu, the controller 180 displays an image view screen 400 including an image list 410 with a plurality of image items. The image items can be a variety of images such as images captured by a camera or images received from external sources. Further, in the example shown in FIG. 9A, the controller 180 displays the image items included in the image list 410 as thumbnails. Also, the number of image items that can be displayed at the same time on the image view screen 400 can be arbitrarily set.

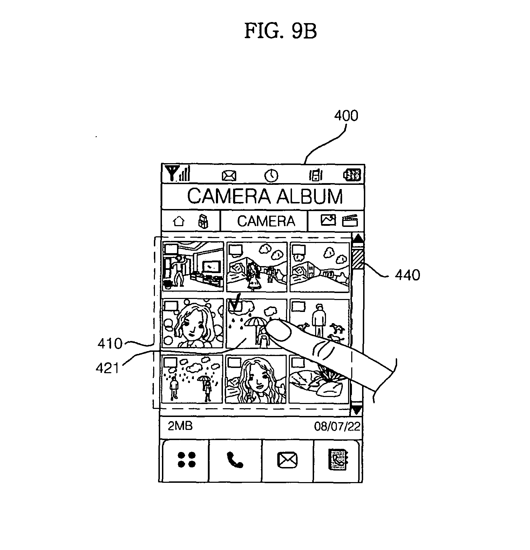

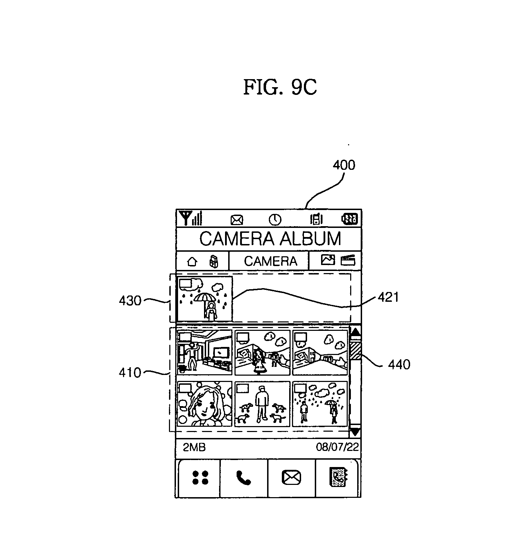

Referring to FIG. 9B, when the user selects one of the image items, e.g., an item 421, the controller 180 marks a checkbox included in the item 421 to indicate to the user the item 421 has been successfully selected. Thereafter, referring to FIG. 9C, the controller 180 displays a selected or chosen image list 430 including the item 421 above the image list 410. Then, once the item 421 is included in the selected image list 430, the controller 180 maintains the item 421 in the selected image list 430 regardless of whether the image list 410 is scrolled. This is similar to the other embodiments discussed above. The above-described embodiments can also be combined.

In addition, various embodiments described herein may be implemented in a computer-readable medium using, for example, computer software, hardware, or some combination thereof. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. In some cases, such embodiments may also be implemented by controller 180.

For a software implementation, the embodiments described herein may be implemented with separate software modules, such as procedures and functions, each of which perform one or more of the functions and operations described herein. The software codes can be implemented with a software application written in any suitable programming language and may be stored in memory such as the memory 160, and executed by a controller or processor, such as the controller 180.

According to the above embodiments of the present invention, the above-described methods can be implemented in a program recorded medium as computer-readable codes. The computer-readable media include all kinds of recording devices in which data readable by a computer system are stored. The computer-readable media include ROM, RAM, CD-ROM, magnetic tapes, floppy discs, optical data storage devices, and the like.

The mobile terminal 100 may also be implemented in a variety of different configurations. Examples of such configurations include folder-type, slide-type, bar-type, rotational-type, swing-type and combinations thereof.

Examples of terminals include mobile as well as stationary terminals, such as mobile phones, user equipment, smart phones, DTV, computers, digital broadcast terminals, personal digital assistants, portable multimedia players (PMP) and navigators.

Thus, the present invention provides several advantages. For example, it is possible to display a number of items selected from an item list at the top of the item list and thus to selectively scroll through other non-selected items. Thus, it is possible to efficiently select a number of items from an item list and to effectively perform a scrolling operation. Therefore, it is possible to easily control the operation of a mobile terminal equipped with a small-size touch screen.

As the present invention may be embodied in several forms it should also be understood that the above-described embodiments are not limited by any of the details of the foregoing description, unless otherwise specified, but rather should be construed broadly within its scope as defined in the appended claims.

## Claims

1. A method of controlling a mobile terminal, the method comprising:
displaying a list of items on a touch screen of the mobile terminal;
rearranging the displayed list of items such that at least one selected item is moved to a chosen item list on a specified location in the list of items, wherein the specified location is a top region of the list of items;
if a number of a plurality of selected items included in the chosen item list exceeds a reference value, reducing a size of the respective plurality of selected items, the reference value being predetermined by a user of the mobile terminal;
maintaining the plurality of selected items in the chosen item list to be at the specified location in the list of items while other unselected items in the list of items are scrolled;
if one of the plurality of selected items is touched and dragged to an edge of the touch screen, deleting the touched-and-dragged item from the chosen item list;
if one of the plurality of selected items is touched and dragged within a region of the chosen item list, moving the touched-and-dragged item to a position at which the item has been dragged.

2. The method of claim 1, wherein the rearranging step rearranges the displayed list of items such that the plurality of selected items are moved to the specified location in the list of items, and the maintaining step maintains the plurality of selected items to be at the specified location in the list of items while the other unselected items in the list of items are scrolled.

3. The method of claim 1, further comprising:
distinctively displaying the selected item compared to the other unselected items.

4. The method of claim 1, further comprising:
displaying the plurality of selected items as thumbnail images if the number of the plurality of selected items exceeds the reference value.

5. The method of claim 1, further comprising:
if one of the plurality of selected items is touched, increasing a size of the touched item and displaying the increased item to be brighter than other untouched items, the increased item including detailed information along with information displayed on the touched item.

6. The method of claim 5, further comprising:
reducing the increased item to its original size upon receiving a cancel key input.

7. The method of claim 6, further comprising:
returning the increased item to its original size upon passing a predefined amount of time after increasing the size of the touched item.

8. The method of claim 1, wherein the displayed list of items are associated with one of a phonebook menu, a mail inbox/outbox menu, an MP3 player menu, a moving image player menu, and an image view menu.

9. A mobile terminal, comprising:
a display unit including a touch screen and configured to display a list of items on the touch screen;
an input unit configured to select at least one of the list of items; and
a controller configured:
to rearrange the displayed list of items such that said at least one selected item is moved to a chosen item list on a specified location in the list of items, wherein the specified location is a top region of the list of items, to reduce a size of a plurality of selected items respectively, if a number of the plurality of selected items included in the chosen item list exceeds a reference value, the reference value being predetermined by a user of the mobile terminal,
to maintain the at least one selected item in the chosen item list to be at the specified location in the list of items while other unselected items in the list of items are scrolled,
to delete a touched-and-dragged item from the specified location if one of the at least one selected items is touched and dragged to an edge of the touch screen, and
to move a touched-and-dragged item to a position at which the item has been dragged, if one of the plurality of selected items is touched and dragged within a region of the chosen item list.

10. The mobile terminal of claim 9, wherein the controller is further configured to rearrange the displayed list of items such that the plurality of selected items are moved to the specified location in the list of items, and to maintain the plurality of selected items to be at the specified location in the list of items while the other unselected items in the list of items are scrolled.

11. The mobile terminal of claim 9, wherein the display unit is further configured to distinctively display the selected item compared to the other unselected items.

12. The mobile terminal of claim 9, wherein the controller is further configured to control the display unit to display the plurality of selected items as thumbnail images if the number of the plurality of selected items exceeds the reference value.

## Patentansprüche

1. Verfahren zum Steuern eines mobilen Endgeräts, wobei das Verfahren umfasst:
Anzeigen einer Liste von Elementen auf einem Berührungsbildschirm des mobilen Endgeräts;
Umordnen der angezeigten Liste von Elementen derart, dass zumindest ein ausgewähltes Element zu einer gewählten Elementliste an eine spezifizierte Position in der Liste von Elementen bewegt wird, wobei die spezifizierte Position ein oberer Bereich der Liste von Elementen ist;
falls eine Anzahl einer Vielzahl von ausgewählten Elementen, die in der gewählten Elementliste enthalten ist, einen Referenzwert übersteigt, Reduzieren einer Größe der entsprechenden Vielzahl von ausgewählten Elementen, wobei der Referenzwert durch einen Benutzer des mobilen Endgeräts vorbestimmt ist;
Beibehalten der Vielzahl von ausgewählten Elementen in der gewählten Elementliste an der spezifizierten Position in der Liste von Elementen, während andere nicht gewählte Elemente in der Liste von Elementen gescrollt werden;
falls eines der Vielzahl von ausgewählten Elementen berührt und an einen Rand des Berührungsbildschirms gezogen wird, Löschen des berührten und gezogenen Elements aus der gewählten Elementliste;
falls eines der Vielzahl von ausgewählten Elementen berührt und innerhalb eines Bereichs der gewählten Elementliste gezogen wird, Bewegen des berührten und gezogenen Elements an eine Position, an welche das Element gezogen worden ist.

2. Verfahren nach Anspruch 1, wobei der Umordnungsschritt die angezeigte Liste von Elementen derart umordnet, dass die Vielzahl von ausgewählten Elementen an die spezifizierte Position in der Liste von Elementen bewegt wird, und der Beibehalteschritt die Vielzahl von ausgewählten Elementen an der spezifizierten Position in der Liste von Elementen beibehält, während die anderen nichtgewählten Elemente in der Liste von Elementen gescrollt werden.

3. Verfahren nach Anspruch 1, ferner umfassend:
unverwechselbares Anzeigen des ausgewählten Elements verglichen mit den anderen nicht gewählten Elementen.

4. Verfahren nach Anspruch 1, ferner umfassend:
Anzeigen der Vielzahl von ausgewählten Elementen als Thumbnailbilder, falls die Anzahl der Vielzahl von ausgewählten Elementen den Referenzwert übersteigt.

5. Verfahren nach Anspruch 1, ferner umfassend:
falls eines der Vielzahl von ausgewählten Elementen berührt wird, Vergrößern einer Größe des berührten Elements und Anzeigen des vergrößerten Elements, heller zu sein als andere nicht berührte Elemente, wobei das vergrößerte Element detaillierte Information zusammen mit Information aufweist, die auf dem berührten Element angezeigt wird.

6. Verfahren nach Anspruch 5, ferner umfassend:
Reduzieren des vergrößerten Elements auf seine Originalgröße bei Empfangen einer Abbruchtasteneingabe.

7. Verfahren nach Anspruch 6, ferner umfassend:
Zurückbringen des vergrößerten Elements auf seine Originalgröße bei Ablauf einer vordefinierten Zeitdauer nach Vergrößern der Größe des berührten Elements.

8. Verfahren nach Anspruch 1, wobei die angezeigte Liste von Elementen im Zusammenhang steht mit einem Telefonbuchmenü, einem Mailinbox/-outboxmenü, einem MP3 Playermenü, einem Bewegtbildplayermenü, und einem Bildanzeigemenü.

9. Mobiles Endgerät umfassend:
eine Anzeigeeinheit aufweisend einen Berührungsbildschirm und ausgebildet, eine Liste von Elementen auf dem Berührungsbildschirm anzuzeigen;
eine Eingabeeinheit, die dazu ausgebildet ist, zumindest eines aus der Liste von Elementen auszuwählen; und
eine Steuerung, die dazu ausgebildet ist:
die angezeigte Liste von Elementen derart umzuordnen, dass das zumindest eine ausgewählte Element zu einer gewählten Elementliste an eine spezifizierte Position in der Liste von Elementen bewegt wird, wobei die spezifizierte Position ein oberer Bereich der Liste von Elementen ist,
eine Größe einer Vielzahl von ausgewählten Elementen jeweils zu reduzieren, falls eine Anzahl der Vielzahl von ausgewählten Elementen, die in der gewählten Elementliste enthalten ist, einen Referenzwert übersteigt, wobei der Referenzwert durch einen Benutzer des mobilen Endgeräts vorbestimmt ist;
das zumindest eine ausgewählte Element in der gewählten Elementliste an der spezifizierten Position in der Liste von Elementen beizubehalten, während andere nicht gewählte Elemente in der Liste von Elementen gescrollt werden,
ein berührtes und gezogenes Element von der spezifizierten Position zu löschen, falls eines des zumindest einen ausgewählten Elements berührt und an einen Rand des Berührungsbildschirms gezogen wird, und
ein berührtes und gezogenes Element an eine Position zu bewegen, an welche das Element bewegt worden ist, falls eines der Vielzahl von ausgewählten Elementen berührt und innerhalb eines Bereichs der gewählten Elementliste gezogen worden ist.

10. Mobiles Endgerät nach Anspruch 9, wobei die Steuerung ferner dazu ausgebildet ist, die angezeigte Liste von Elementen derart umzuordnen, dass die Vielzahl von ausgewählten Elementen an die spezifizierte Position in der Liste von Elementen bewegt wird, und die Vielzahl von ausgewählten Elementen an der spezifizierten Position in der Liste von Elementen beizubehalten, während die anderen nicht gewählten Elemente in der Liste von Elementen gescrollt werden.

11. Mobiles Endgerät nach Anspruch 9, wobei die Anzeigeeinheit ferner dazu ausgebildet ist, das ausgewählte Element unverwechselbar anzuzeigen verglichen mit den anderen nicht gewählten Elementen.

12. Mobiles Endgerät nach Anspruch 9, wobei die Steuerung ferner dazu ausgebildet ist, die Anzeigeeinheit derart zu steuern, die Vielzahl von ausgewählten Elementen als Thumbnailbilder anzuzeigen, falls die Anzahl der Vielzahl von ausgewählten Elementen den Referenzwert übersteigt.

## Revendications

1. Procédé de commande d'un terminal mobile, le procédé comprenant les étapes consistant à :
afficher une liste d'éléments sur un écran tactile du terminal mobile ;
réarranger la liste d'éléments affichée d'une manière telle qu'au moins un élément sélectionné est déplacé vers une liste d'éléments choisis sur un emplacement spécifié dans la liste d'éléments, dans lequel l'emplacement spécifié est une région supérieure de la liste d'éléments ;
si un nombre d'éléments parmi une pluralité d'éléments sélectionnés contenus dans la liste d'éléments choisis dépasse une valeur de référence, réduire une taille de la pluralité respective d'éléments sélectionnés, la valeur de référence étant prédéterminée par un utilisateur du terminal mobile ;
maintenir la pluralité d'éléments sélectionnés dans la liste d'éléments choisis pour qu'ils se trouvent à l'emplacement spécifié dans la liste d'éléments alors que d'autres éléments non sélectionnés dans la liste d'éléments sont défilés ;
si l'un parmi la pluralité d'éléments sélectionnés est touché et glissé vers un bord de l'écran tactile, effacer l'élément touché et déplacé de la liste d'éléments choisis ;
si l'un parmi la pluralité d'éléments sélectionnés est touché et glissé à l'intérieur d'une région de la liste d'éléments choisis, déplacer l'élément touché et glissé vers une position au niveau de laquelle l'élément a été glissé.

2. Procédé selon la revendication 1, dans lequel l'étape de réarrangement réar-range la liste d'éléments affichée d'une manière telle que la pluralité d'éléments sélectionnés est déplacée vers l'emplacement spécifié dans la liste d'éléments, et l'étape de maintien maintient la pluralité d'éléments sélectionnés pour qu'ils se trouvent à l'emplacement spécifié dans la liste d'éléments alors que les autres éléments non sélectionnés dans la liste d'éléments sont défilés.

3. Procédé selon la revendication 1, comprenant en outre l'étape consistant à :
afficher de manière distincte l'élément sélectionné comparé aux autres éléments non sélectionnés.

4. Procédé selon la revendication 1, comprenant en outre l'étape consistant à :
afficher la pluralité d'éléments sélectionnés en tant qu'images miniatures si le nombre d'éléments parmi la pluralité d'éléments sélectionnés dépasse la valeur de référence.

5. Procédé selon la revendication 1, comprenant en outre les étapes consistant à :
si l'un parmi la pluralité d'éléments sélectionnés est touché, augmenter une taille de l'élément touché et afficher l'élément augmenté pour qu'il soit plus brillant que les autres éléments non touchés, l'élément augmenté contenant des informations détaillées avec des informations affichées sur l'élément touché.

6. Procédé selon la revendication 5, comprenant en outre l'étape consistant à :
réduire l'élément augmenté à sa taille d'origine sur réception d'une entrée de touche d'annulation.

7. Procédé selon la revendication 6, comprenant en outre l'étape consistant à :
ramener l'élément augmenté à sa taille d'origine sur écoulement d'une durée prédéfinie après l'augmentation de la taille de l'élément touché.

8. Procédé selon la revendication 1, dans lequel la liste d'éléments affichée est associée à l'un parmi un menu de répertoire, un menu de boîte de réception et d'expédition de courriel, un menu de lecteur MP3, un menu de lecteur vidéo, et un menu de visionneuse d'images.

9. Terminal mobile, comprenant :
une unité d'affichage comprenant un écran tactile et configurée pour afficher une liste d'éléments sur l'écran tactile ;
une unité d'entrée configurée pour sélectionner au moins l'un parmi la liste d'éléments ; et
un contrôleur configuré pour :
réarranger la liste d'éléments affichée d'une manière telle que ledit au moins un élément sélectionné est déplacé vers une liste d'éléments choisis sur un emplacement spécifié dans la liste d'éléments, dans lequel l'emplacement spécifié est une région supérieure de la liste d'éléments,
réduire une taille d'une pluralité d'éléments sélectionnés, respectivement, si un nombre d'éléments parmi la pluralité d'éléments sélectionnés contenus dans la liste d'éléments choisis dépasse une valeur de référence, la valeur de référence étant prédéterminée par un utilisateur du terminal mobile,
maintenir le au moins un élément sélectionné dans la liste d'éléments choisis pour qu'il se trouve à l'emplacement spécifié dans la liste d'éléments alors que d'autres éléments non sélectionnés dans la liste d'éléments sont défilés,
effacer un élément touché et glissé de l'emplacement spécifié, si le au moins un élément sélectionné est touché et glissé vers un bord de l'écran tactile, et
déplacer un élément touché et glissé vers une position au niveau de laquelle l'élément a été glissé, si l'un parmi la pluralité d'éléments sélectionnés est touché et glissé à l'intérieur d'une région de la liste d'éléments choisis.

10. Terminal mobile selon la revendication 9, dans lequel le contrôleur est en outre configuré pour réarranger la liste d'éléments affichée d'une manière telle que la pluralité d'éléments sélectionnés est déplacée vers l'emplacement spécifié dans la liste d'éléments, et pour maintenir la pluralité d'éléments sélectionnés pour qu'ils se trouvent à l'emplacement spécifié dans la liste d'éléments alors que les autres éléments non sélectionnés dans la liste d'éléments sont défilés.

11. Terminal mobile selon la revendication 9, dans lequel l'unité d'affichage est en outre configurée pour afficher de manière distincte l'élément sélectionné comparé aux autres éléments non sélectionnés.

12. Terminal mobile selon la revendication 9, dans lequel le contrôleur est en outre configuré pour commander l'unité d'affichage pour afficher la pluralité d'éléments sélectionnés en tant qu'images miniatures si le nombre d'éléments parmi la pluralité d'éléments sélectionnés dépasse la valeur de référence.
